# EUROPEAN PATENT APPLICATION

(11) **EP 2 515 590 A1**
(43) Date of publication of application: **24.10.2012**
(21) Application number: 10837688.0
(22) Date of filing: 17.12.2010
(51) Int. Cl.: H04W 56/00, H04W 28/06, H04W 92/12

(54) **WIRELESS BASE STATION, AND RELAY DEVICE**

(30) Priority: 18.12.2009 JP 2009287723
(71) Applicant: NTT DoCoMo, Inc., Tokyo 100-6150 (JP)
(72) Inventor: WATANABE, Takayuki, Tokyo 100-6150 (JP)
(74) Representative: HOFFMANN EITLE
(86) International application number: PCT/JP2010/072763
(87) International publication number: WO 2011/074664

(57) **Abstract**

A radio base station BTS according to the present invention includes a timing adjustment unit 15 configured to adjust transmission timing of the frame to be transmitted by a second synchronous signal transmission unit, 12 based on processing delay time in the relay device 10 and round-trip time RTT of the radio equipment device RE at the relay device 10, and the radio equipment controller REC#1, #2 are configured to calculate round-trip time RTT of the radio equipment device RE at the radio equipment controller REC#1, #2, based on a difference T14 between transmission time of the first synchronous signal R1 and reception time of the fourth synchronous signal R4.

## Description

### TECHNICAL FIELD

The present invention relates to a radio base station and a relay device.

### BACKGROUND ART

Conventionally, CPRI (Common Public Radio Interface) has specified a radio base station BTS (Base Transceiver Station) which includes a radio equipment device RE and a radio equipment controller REC (Radio Equipment Control) and is configured to transmit and receive a signal between the radio equipment device RE and the radio equipment controller REC via a physical line such as an optical line, an electrical line, or the like.

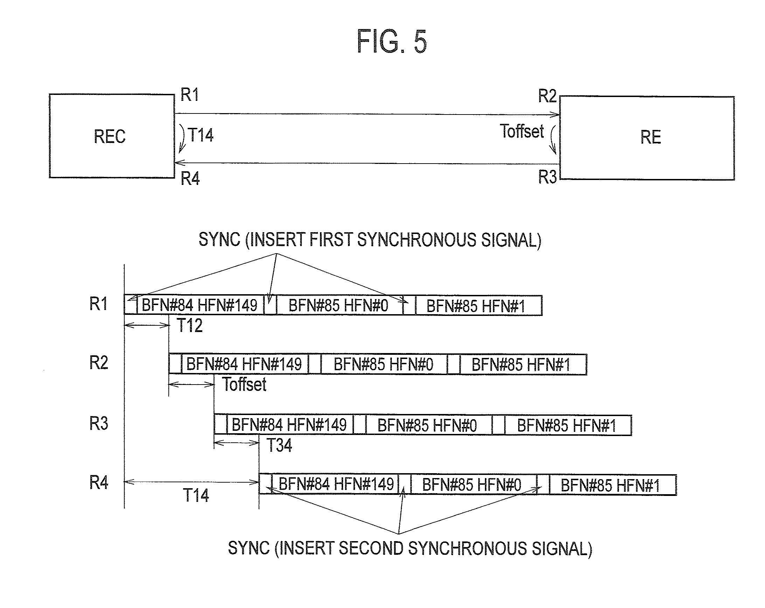

As shown in Fig. 5, the radio equipment controller REC and the radio equipment device RE insert a synchronous signal "SYNC" at a head position of each hyper frame and transmit the hyper frame. The radio equipment controller REC is configured to insert a first synchronous signal into "SYNC" in each hyper frame and transmit the first synchronous signal to the radio equipment device RE, and to acquire a second synchronous signal inserted into "SYNC" in each hyper frame, from the radio equipment device RE.

Here, the radio equipment controller REC is capable of calculating round-trip time RTT of the radio equipment device RE at the radio equipment controller REC, based on a difference T14 between transmission time R1 of the first synchronous signal and reception time R4 of the second synchronous signal.

### PRIOR ART DOCUMENT

### NON-PATENT DOCUMENT

Non-Patent Document 1: CPRI Specification V4.0 (http://www.cpri.info/spec.html), June 30, 2008

### SUMMARY OF THE INVENTION

In recent years, CPRI has studied implementation of a radio base station BTS which incorporates both a radio equipment controller REC for W-CDMA system and a radio equipment controller REC for LTE (Long Term Evolution) system.

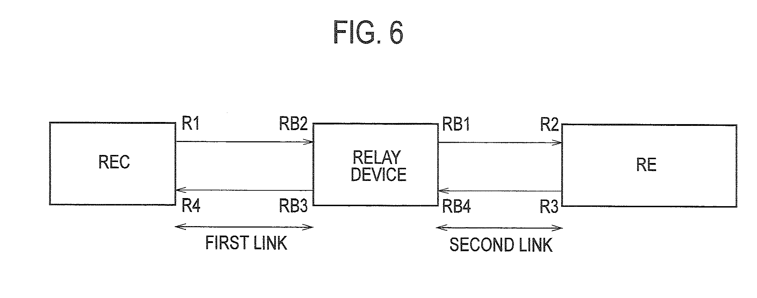

Here, as shown in Fig. 6, the above synchronous signals are configured to terminate at a first link between the radio equipment controller REC and a relay device and at a second link between the relay device and the radio equipment device RE.

In this case, in the radio base station BTS, frame timing differs between the first link and the second link. In the device configuration as shown in Fig. 6, there has conventionally been a problem that since a difference in the frame timing cannot be recognized, each radio equipment controller REC cannot accurately calculate the round-trip time RTT of the radio equipment device RE.

Hence, the present invention has been made in light of the problem described above, and an object of the present invention is to provide a radio base station and a relay device which can accurately calculate round-trip time of a radio equipment device RE at each radio equipment controller REC, even when a relay device is provided.

The first feature of the present invention is summarized in that a radio base station including a radio equipment controller, a relay device, and a radio equipment device which are connected via a physical line, wherein a synchronous signal, which is inserted into a predetermined position in a frame and transmitted, is configured to terminate at a first link between the radio equipment controller and the relay device and to terminate at a second link between the relay device and the radio equipment device, the relay device includes: a first synchronous signal reception unit configured to extract a first synchronous signal from a predetermined position in a frame received from the radio equipment controller via the first link; a second synchronous signal transmission unit configured to insert a second synchronous signal into the predetermined position of the frame and to transmit the second synchronous signal to the radio equipment device via the second link, in accordance with the extracted first synchronous signal; a third synchronous signal reception unit configured to extract a third synchronous signal from the predetermined position in the frame received from the radio equipment device via the second link; a fourth synchronous signal transmission unit configured to insert a fourth synchronous signal into the predetermined position in the frame and to transmit the fourth synchronous signal to the radio equipment controller via the second link, in accordance with the extracted third synchronous signal; and a timing adjustment unit configured to adjust transmission timing of the frame to be transmitted by the second synchronous signal transmission unit, based on processing delay time in the relay device and round-trip time of the radio equipment device at the relay device, and the radio equipment controller is configured to calculate round-trip response time of the radio equipment device at the radio equipment controller, based on a difference between transmission time of the first synchronous signal and reception time of the fourth synchronous signal.

In the first feature, the timing adjustment unit may be configured to calculate a total time of processing delay time in the relay device and round-trip time of the radio equipment device at the relay device, from a difference between reception time of the first synchronous signal and transmission time of the second synchronous signal, a difference between the transmission time of the second synchronous signal and reception time of the third synchronous signal, and a difference between the reception time of the third synchronous signal and transmission time of the fourth synchronous signal, and to delay the transmission timing of the frame to be transmitted by the second synchronous signal transmission unit, by the total time.

The second feature of the present invention is summarized in that a relay device connected to a radio equipment controller and a radio equipment device via a physical line and provided in a radio base station, wherein a synchronous signal, which is inserted into a predetermined position in a frame and transmitted, is configured to terminate at a first link between the radio equipment controller and the relay device and to terminate at a second link between the relay device and the radio equipment device, and the relay device includes: a first synchronous signal reception unit configured to extract a first synchronous signal from a predetermined position in a frame received from the radio equipment controller via the first link; a second synchronous signal transmission unit configured to insert a second synchronous signal into the predetermined position in the frame and to transmit the second synchronous signal to the radio equipment device via the second link, in accordance with the extracted first synchronous signal; a third synchronous signal reception unit configured to extract a third synchronous signal from the predetermined position in the frame received from the radio equipment device via the second link; a fourth synchronous signal transmission unit configured to insert a fourth synchronous signal into the predetermined position in the frame and to transmit the fourth synchronous signal to the radio equipment controller via the first link, in accordance with the extracted third synchronous signal; and a timing adjustment unit configured to adjust transmission timing of the frame to be transmitted by the second synchronous signal transmission unit, based on processing delay time in the relay device and round-trip time of the radio equipment device at the relay device.

In the third feature, the timing adjustment unit may be configured to calculate a total time of processing delay time in the relay device and the round-time delay time in the relay device, from a difference between reception time of the first synchronous signal and transmission time of the second synchronous signal, a difference between the transmission time of the second synchronous signal and reception time of the third synchronous signal, and a difference between the reception time of the third synchronous signal and transmission time of the fourth synchronous signal, and to delay the transmission timing of the frame to be transmitted by the second synchronous signal transmission unit, by the total time.

### BRIEF DESCRIPTION OF THE DRAWINGS

[Fig. 1] Fig. 1 is a functional block diagram of a radio base station according to the first embodiment of the invention.
[Fig. 2] Fig. 2 is a view showing a protocol stack to be used among a radio equipment device, a relay device, and a radio equipment controller which constitute the radio base station according to the first embodiment of the invention.
[Fig. 3] Fig. 3 is a functional block diagram of the relay device according to the first embodiment of the invention.
[Fig. 4] Fig. 4 is a view for describing operation of the radio base station according to the first embodiment of the invention.
[Fig. 5] Fig. 5 is a view for describing operation of a conventional radio base station.
[Fig. 6] Fig. 6 is a view showing a terminated position of a synchronous signal in the conventional radio base station.

### MODES FOR CARRYING OUT THE INTENTION

### (Radio base station according to the first embodiment of the invention)

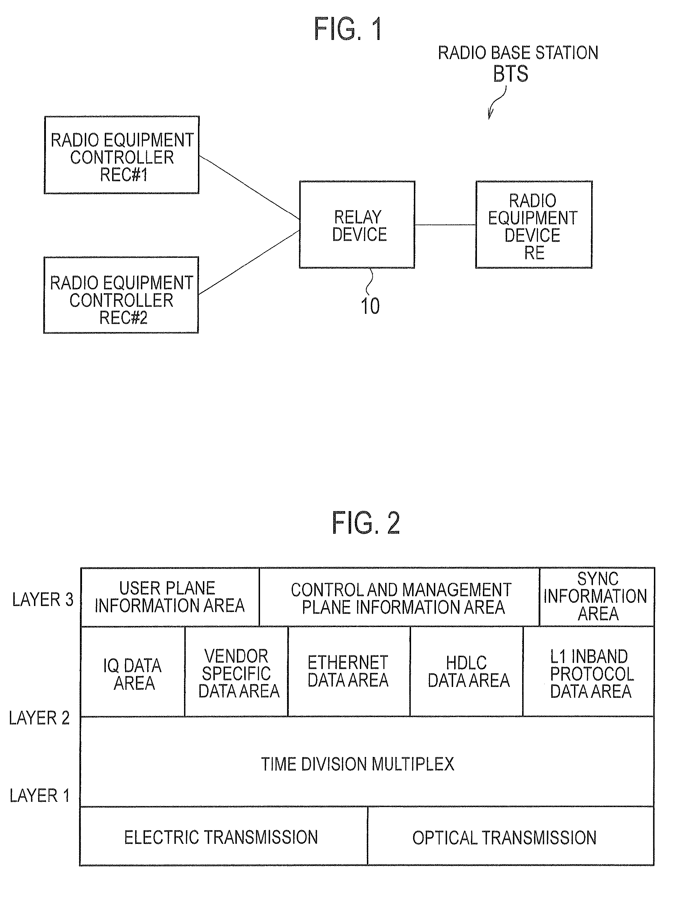

A radio base station according to the first embodiment of the invention will be described with reference to Fig. 1 through Fig. 4.

As shown in Fig. 1, a radio base station BTS according to the embodiment is provided with a radio equipment device RE, a relay device 10, and multiple radio equipment controllers REC#1, REC#2.

Here, the radio equipment device RE, the relay device 10, and the radio equipment controllers REC#1, REC#2 are separate devices, and connected to each other via a physical line such as an optical line, an electric line, or the like. For example, the radio equipment device RE, the relay device 10, and the radio equipment controllers REC#1, REC#2 are those specified by CPRI.

For example, the radio equipment controller REC#1 is a radio equipment controller REC for W-CDMA system, and the radio equipment controller REC#2 is a radio equipment controller REC for LTE system. Hereinafter, the radio equipment controllers REC#1 and REC#2 will be collectively referred to as the radio equipment controller REC.

Here, a protocol stack to be used among the radio equipment device RE, the relay device 10, and the radio equipment controller REC will be described with reference to Fig. 2.

As shown in Fig. 2, a configuration is such that as layer 2 information, "user plane information," "control and management plane information," and "SYNC information (synchronous signal)" are transmitted and received in a first link between the radio equipment controller REC and the relay device 10, and a second link between the relay device 10 and the radio equipment device RE.

Specifically, in the frame to be transmitted and received over the first link and the second link, the user plane information is inserted in a user plane information area, the control and management plane information is inserted in a control and management plane information area, and the SYNC information (synchronous signal information) is inserted into a SYNC information area.

In addition, the configuration is such that as layer 2 information, "IQ data," "vendor specific data," "Ethernet ( Registered trademark) data," "HDLC data," "L1 inband protocol data," and the like are transmitted and received in the first link between the radio equipment controller REC and the relay device 10, and the second link between the relay device 10 and the radio equipment device RE.

Specifically, in the frame to be transmitted or received over the first link and the second link, the IQ data is inserted into an IQ data area, the vendor specific data is inserted into a vendor specific data area, the Ethernet (Registered trademark) data is inserted into an Ethernet (Registered trademark) data area, the HDLC data is inserted into an HDLC data area, and the L1 inband protocol data is inserted into an L1 inband protocol data area.

Thus, each of the layer 3 information and the layer 2 information is configured to terminate in the first link and the second link.

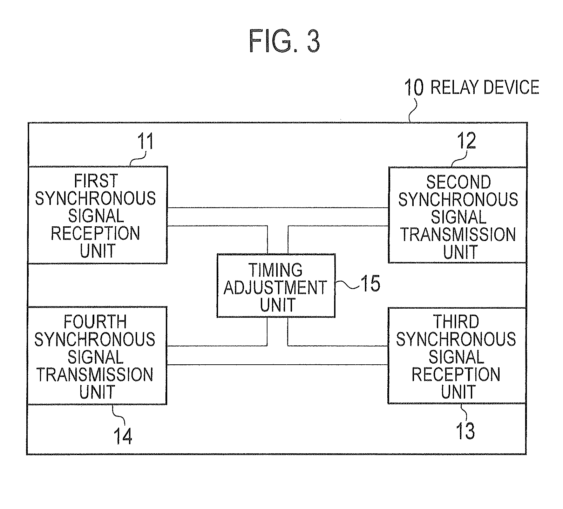

As shown in Fig. 3, the relay device 10 is provided with a first synchronous signal reception unit 11, a second synchronous signal transmission unit 12, a third synchronous signal reception unit 13, a fourth synchronous signal transmission unit 14, and a timing adjustment unit 15.

The first synchronous signal reception unit 11 is configured to extract a first synchronous signal from a predetermined position (SYNC information area) in a frame received from the radio equipment controller REC via the first link.

The second synchronous signal transmission unit 12 is configured to insert a second synchronous signal into the predetermined position (SYNC information area) in the frame and to transmit the second synchronous signal to the radio equipment device RE via the second link, in accordance with the first synchronous signal extracted by the first synchronous signal reception unit 11.

The third synchronous signal reception unit 13 is configured to extract a third synchronous signal corresponding to the second synchronous signal mentioned above, from the predetermined position (SYNC information area) in the frame received from the radio equipment device RE via the second link.

The fourth synchronous signal transmission unit 14 is configured to insert a fourth synchronous signal into the predetermined position (SYNC information area) in the frame and to transmit the fourth synchronous signal to the radio equipment controller REC via the first link, in accordance with the third synchronous signal extracted by the third synchronous signal reception unit 13.

The timing adjustment unit 15 is configured to adjust transmission timing of the frame to be transmitted by the second synchronous signal transmission unit 14, based on processing delay time in the relay device 10 and round-trip time RTT of the radio equipment device RE at the relay device 10.

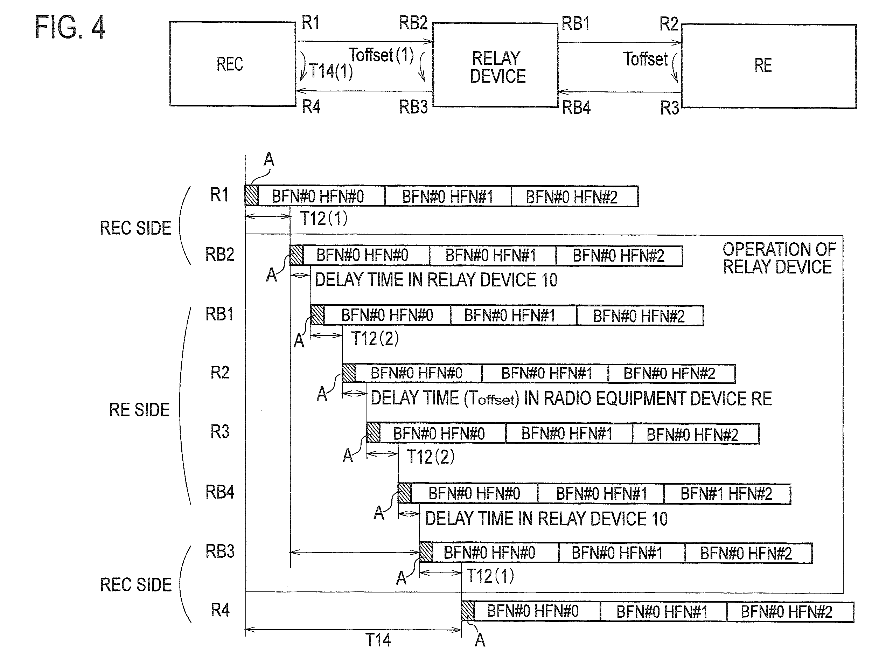

Here, a method for adjusting transmission timing of the frame will be described with reference to Fig. 4. In addition, in an example of Fig. 4, the predetermined position (SYNC information area) is assumed to be provided in an area A specified by BFN (NodeB Frame Number) #0 and HFN (Hyper Frame Number) #0 in the frame.

In Fig. 4, at time R1, the radio equipment controller REC inserts a first synchronous signal into the predetermined position (SYNC information area) in the frame and transmits the first synchronous signal to the relay device 10. At time RB2, the first synchronous signal transmission unit 12 of the relay device 10 acquires the first synchronous signal from the predetermined position (SYNC information area) in the frame. Thus, a difference between the transmission time R1 of the first synchronous signal at the radio equipment controller REC and the reception time RB2 of the first synchronous signal at the relay device 10 is "T12(1)".

At time RB1, the second synchronous signal transmission unit 12 of the relay device 10 inserts a second synchronous signal into the predetermined position (SYNC information area) in the frame and transmits the second synchronous signal to the radio equipment device RE. Thus, a difference between the reception time RB2 of the first synchronous signal at the relay device 10 and transmission time RB1 of the second synchronous signal at the relay device 10 is "delay time in the relay device 10".

At time R2, the radio equipment device RE acquires the second synchronous signal from the predetermined position (SYNC information area) in the frame. Thus, a difference between the transmission time RB1 of the second synchronous signal at the relay device 10 and the reception time R2 of the second synchronous signal at the radio equipment device RE is "T12 (2)".

At time R3, the radio equipment device RE inserts a third synchronous signal into the predetermined position (SYNC information area) in the frame and transmits the third synchronous signal to the relay device 10. Thus, a difference between the reception time R2 of the second synchronous signal at the radio equipment device RE and the transmission time R3 of the third synchronous signal at the radio equipment device RE is "delay time (T_{offset}) in the radio equipment device RE".

At time R4, the third synchronous signal reception unit 13 of the relay device 10 acquires the third synchronous signal from the predetermined position (SYNC information area) in the frame. Thus, a difference between the transmission time R3 of the third synchronous signal at the radio equipment device RE and reception time RB4 of a third synchronized response signal at the relay device 10 is "T12(2)".

At time RB3, the fourth synchronous signal transmission unit 14 of the relay device 10 inserts a fourth synchronous signal into the predetermined position (SYNC information area) in the frame and transmits the fourth synchronous signal to the radio equipment controller REC. Thus, a difference between the reception time RB4 of the third synchronous signal at the relay device 10 and the transmission time RB3 of the fourth synchronous signal at the relay device 10 is "delay time in the relay device 10".

At time R4, the radio equipment controller REC acquires the fourth synchronous signal from the predetermined position (SYNC information area) in the frame. Thus, a difference between the reception time RB3 of the fourth synchronous signal at the relay device 10 and the transmission time R4 of the fourth synchronous signal at the radio equipment controller REC is "T12(1)".

As described above, a difference "T14" between the transmission time R1 of the first synchronous signal at the radio equipment controller REC and the reception time R4 of the fourth synchronous signal at the radio equipment controller REC is calculated from "T12 (1) " + "delay time in the relay device 10" + "T12(2)" + "delay time (T_{offset}) in the radio equipment device RE" + "T12(2)" + "delay time in the relay device 10" + "T12 (1) ".

The difference "T14" corresponds to round-trip time RTT of the radio equipment device RE at the radio equipment controller REC.

Here, the round-trip time RTT of the radio equipment device RE at the radio equipment controller REC is calculated from a difference between the transmission time R1 of the first synchronous signal at the radio equipment controller REC and the reception time R4 of the fourth synchronous signal at the radio equipment controller REC.

Specifically, the radio equipment controller REC is summarized to be configured to calculate the round-trip time RTT of the radio equipment device RE at the radio equipment controller REC, based on the difference between the transmission time R1 of the first synchronous signal and the reception time R4 of the fourth synchronous signal.

In addition, the round-trip time RTT of the radio equipment device RE at the relay device 10 is calculated from a difference between the transmission time RB1 of the second synchronous signal at the relay device 10 and the reception time RB4 of the third synchronous signal at the relay device 10.

Specifically, the timing adjustment unit 15 is configured to calculate the round-trip time RTT of the radio equipment device RE at the relay device 10, based on the difference between the transmission time RB1 of the second synchronous signal and the reception time RB4 of the third synchronous signal.

Specifically, the timing adjustment unit 15 may be configured to calculate total time ("delay time in the relay device 10" + "T12 (2) " + "delay time (offset) in the radio equipment device RE" + "T12 (2) " + "delay time in the relay device 10") of processing time in the relay device 10 and the round-trip time RTT of the radio equipment device RE at the relay device 10 from the difference ("delay time in the relay device 10") between the reception time RB2 of the first synchronous signal and the transmission time RB1 of the second synchronous signal, the difference ("T12(2)" + "delay time (T_{offset}) in the radio equipment device RE" + "T12 (2) ") between the transmission time RB1 of the second synchronous signal and the reception time RB4 of the third synchronous signal, and the difference ("delay time in the relay device 10") between the reception time RB4 of the third synchronous signal and the transmission time RB3 of the fourth synchronous signal, and to delay transmission timing of the frame to be transmitted by the second synchronous signal transmission unit 14 by the total time. Thus, by delaying the transmission timing of the frame, the round-trip time RTT of the radio equipment device RE can be accurately calculated without making any change to the radio equipment controller REC, even when there is any difference in the frame timing between the first link and the second link as shown in Fig. 6.

### (Operation and effect of a radio base station according to the first embodiment of the invention)

With the radio base station BTS according to the first embodiment of the invention, even if the relay device 10 is provided, each radio equipment controller REC#1, REC#2 can accurately calculate round-trip time RTT (T14) of the radio equipment device RE at each radio equipment controller REC#1, REC#2, without being aware of presence of the relay device 10.

In addition, operation of the radio equipment device RE and the radio equipment controller REC described above may be implemented by hardware, may be implemented by a software module which is executed by a processor, or may be implemented by a combination thereof.

The software module may be provided in a storage medium of any format such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to a processor so that the processor can read and write information from/into the storage medium. In addition, the storage medium may be integrated in the processor. Furthermore, the storage medium and processor may be provided in an ASIC. The ASIC may be provided in the radio equipment device RE and the radio equipment controller REC. In addition, the storage medium and processor may be provided in the radio equipment device RE and the radio equipment controller REC as a discrete component.

Although the invention has been described in detail by using the embodiment mentioned above, it is apparent to those skilled in the art that the invention is not limited to the embodiment described in the specification. The invention can be carried out as a modification and changed mode, without deviating from the intent and scope of the invention defined by the Claims. Therefore, the description of the specification is intended to provide exemplification and description, and does not have any limiting meaning to the invention.

In addition, Japanese Patent Application No. 2009-287723 (filed on December 18, 2009) is incorporated herein by reference in its entirety.

### INDUSTRIAL APPLICABILITY

With the invention, even if a relay device is provided, a ratio base station and the relay device which can accurately calculate round-trip time of a radio equipment device RE at each radio equipment controller REC can be provided. Therefore, the invention is useful in radio communications and the like.

### EXPLANATION OF THE REFERENCE NUMERALS

- RE: Radio equipment device
- REC: Radio equipment controller
- 10: Relay device
- 11: Synchronization request signal reception unit
- 12: Synchronization request signal transmission unit
- 13: Synchronization response signal reception unit
- 14: Synchronization response signal transmission unit
- 15: Timing adjustment unit

## Claims

1. A radio base station comprising a radio equipment controller, a relay device, and a radio equipment device which are connected via a physical line, wherein
a synchronous signal, which is inserted into a predetermined position in a frame and transmitted, is configured to terminate at a first link between the radio equipment controller and the relay device and to terminate at a second link between the relay device and the radio equipment device,
the relay device comprises:
a first synchronous signal reception unit configured to extract a first synchronous signal from a predetermined position in a frame received from the radio equipment controller via the first link;
a second synchronous signal transmission unit configured to insert a second synchronous signal into the predetermined position of the frame and to transmit the second synchronous signal to the radio equipment device via the second link, in accordance with the extracted first synchronous signal;
a third synchronous signal reception unit configured to extract a third synchronous signal from the predetermined position in the frame received from the radio equipment device via the second link;
a fourth synchronous signal transmission unit configured to insert a fourth synchronous signal into the predetermined position in the frame and to transmit the fourth synchronous signal to the radio equipment controller via the second link, in accordance with the extracted third synchronous signal; and
a timing adjustment unit configured to adjust transmission timing of the frame to be transmitted by the second synchronous signal transmission unit, based on processing delay time in the relay device and round-trip time of the radio equipment device at the relay device, and
the radio equipment controller is configured to calculate round-trip response time of the radio equipment device at the radio equipment controller, based on a difference between transmission time of the first synchronous signal and reception time of the fourth synchronous signal.

2. The radio base station according to claim 1, wherein the timing adjustment unit is configured to calculate a total time of processing delay time in the relay device and round-trip time of the radio equipment device at the relay device, from a difference between reception time of the first synchronous signal and transmission time of the second synchronous signal, a difference between the transmission time of the second synchronous signal and reception time of the third synchronous signal, and a difference between the reception time of the third synchronous signal and transmission time of the fourth synchronous signal, and to delay the transmission timing of the frame to be transmitted by the second synchronous signal transmission unit, by the total time.

3. A relay device connected to a radio equipment controller and a radio equipment device via a physical line and provided in a radio base station, wherein
a synchronous signal, which is inserted into a predetermined position in a frame and transmitted, is configured to terminate at a first link between the radio equipment controller and the relay device and to terminate at a second link between the relay device and the radio equipment device, and
the relay device comprises:
a first synchronous signal reception unit configured to extract a first synchronous signal from a predetermined position in a frame received from the radio equipment controller via the first link;
a second synchronous signal transmission unit configured to insert a second synchronous signal into the predetermined position in the frame and to transmit the second synchronous signal to the radio equipment device via the second link, in accordance with the extracted first synchronous signal;
a third synchronous signal reception unit configured to extract a third synchronous signal from the predetermined position in the frame received from the radio equipment device via the second link;
a fourth synchronous signal transmission unit configured to insert a fourth synchronous signal into the predetermined position in the frame and to transmit the fourth synchronous signal to the radio equipment controller via the first link, in accordance with the extracted third synchronous signal; and
a timing adjustment unit configured to adjust transmission timing of the frame to be transmitted by the second synchronous signal transmission unit, based on processing delay time in the relay device and round-trip time of the radio equipment device at the relay device.

4. The relay device according to claim 3, wherein the timing adjustment unit is configured to calculate a total time of processing delay time in the relay device and the round-time delay time in the relay device, from a difference between reception time of the first synchronous signal and transmission time of the second synchronous signal, a difference between the transmission time of the second synchronous signal and reception time of the third synchronous signal, and a difference between the reception time of the third synchronous signal and transmission time of the fourth synchronous signal, and to delay the transmission timing of the frame to be transmitted by the second synchronous signal transmission unit, by the total time.
